# EUROPÄISCHE PATENTSCHRIFT

(11) **EP 0 451 487 B1**
(45) Veröffentlichungstag und Bekanntmachung des Hinweises auf die Patenterteilung: **18.05.1994**
(21) Anmeldenummer: 91103060.9
(22) Anmeldetag: 01.03.1991
(51) Int. Cl.: A47J 17/08, A23N 7/04

(54) **Handgerät zum Schälen von länglichem Gemüse**
Hand tool for peeling elongated vegetables
Outil à main pour éplucher des légumes allongés

(30) Priorität: 13.04.1990 DE 4012055
(43) Veröffentlichungstag der Anmeldung: 16.10.1991
(73) Patentinhaber: Westmark Schulte GmbH & Co. KG, D-58849 Herscheid (DE)
(72) Erfinder: Henning, Wilhelm, Dr., W-4320 Hattingen (DE); König, Hans Gerd, W-5980 Werdohl (DE)
(74) Vertreter: Peerbooms, Rudolf, Dipl.-Phys.

(56) Entgegenhaltungen:
- DE-B- 1 139 945
- DE-B- 1 177 086
- FR-A- 2 273 500
- US-A- 3 420 563

## Beschreibung

Die Erfindung betrifft ein Handgerät zum Schälen von länglichem Gemüse, insbesondere von Spargel, Möhren, Gurken, Rettichen, Schwarzwurzeln oder Zucchinis, mit zwei gegen Federkraft um eine Schwenkachse schwenkbaren Handhebeln, die an ihren freien Enden zwei sich gegenüberliegende, als Sparschäler ausgebildete Schälmesser tragen.

Bei einem derartigen, durch die DE-AS 1 139 945 bekannten Handgerät, sind die durch Federkraft in eine V-Form aufgespreizten Handhebel an ihren freien Enden mit zwei Schälmessern besetzt, die sich in Längsrichtung der Handhebel erstrecken und damit - entsprechend der V-Form der beiden Handschenkel - ebenfalls in Längsrichtung gegeneinander geneigt sind. Beim Schälen werden von einer Gemüsestange zwar gleichzeitig zwei Schalenstreifen abgenommen, jedoch liegen diese nicht diametral einander gegenüber. Bei Ausführung aufeinanderfolgender Schälhube kann zwar für das im Blickfeld liegende Schälmesser sichergestellt werden, daß von diesem Schälmesser nur Schale abgetragen wird, aber von dem gegenüberliegenden, durch die Gemüsestange verdeckte Schälmesser, wird ebenfalls ein Materialstreifen von der Gemüsestange abgeschält, wobei aber keine optische Kontrollmöglichkeit gegeben ist, ob dieses verdeckte Schälmesser Schale oder Gemüsefleisch abhebt. Der Einsatz des bekannten Gerätes führt vielfach zu einem erheblichen Verlust an Gemüsefleisch, was insbesondere bei teuren Gemüsearten wie Spargel von erheblichem Nachteil ist.

Durch das DE-GM 78 16 311 ist ein Standgerät zum Schälen von Spargel bekannt, bei welchem paarweise diametral gegenüberliegende Schälmesser von federbelasteten Schwenkhebeln getragen werden, deren individuelle Schwenkachsen jeweils parallel zur Längserstreckung der Schälmesser gerichtet sind, so daß unabhängig von der Schwenkstellung dieser Schwenkhebel sichergestellt ist, daß immer nur exakt diametral gegenüberliegende Schalenstreifen abgenommen werden. Diese bekannte Schälvorrichtung, die aus vielen Bauteilen besteht, ist aber sehr aufwendig und nur äußerst schwierig sauber zu halten und damit als Haushalts-Küchengerät praktisch nicht verwendbar. Ähnliche Nachteile liegen bei dem durch DE-GM 75 25 168 bekannten Spargelschälgerät vor, bei dem die sich paarweise gegenüberliegenden Schälmesser über Seilzüge in eine Offenstellung gezogen werden müssen, um eine Spargelstange einführen zu können. Auch dieses Gerät ist aufwendig in der Herstellung und entspricht nicht den hygienischen Anforderungen an Küchengeräte.

Der Erfindung liegt die Aufgabe zugrunde, ein preiswertes und bequem betätigbares Handgerät gemäß Gattungsbegriff zu schaffen, mit dem verlustarm auch im Durchmesser stark unterschiedliche Gemüsestangen geschält werden können und das mühelos gereinigt und raumsparend aufbewahrt werden kann.

Ausgehend von einem Handgerät der gattungsgemäßen Art, wird die Lösung dieser Aufgabe dadurch erreicht, daß die Schälmesser mit ihrer Längsachse parallel zur Schwenkachse der Handhebel gerichtet sind und unabhängig von der Schwenkstellung der Handhebel ständig parallel zueinander ausgerichtet bleiben.

Das Handgerät nach der Erfindung zeichnet sich durch eine Reihe von Vorteilen aus. Es besteht aus nur wenigen, leicht zu reinigenden Bauteilen, und zwar im wesentlichen nur aus den beiden über ein Scharniergelenk oder über einen federnden Bogen miteinander verbundenen Handhebeln und den daran abragend angebrachten Schälmessern, die infolge ihrer jeweils parallelen Ausrichtung zur Schwenkachse der Handhebel unabhängig von deren Spreizstellung immer nur an zwei exakt diametral gegenüberliegenden Seiten an der Gemüsestange angreifen. Bei den aufeinanderfolgend auszuführenden Schälhuben ist somit sichergestellt, daß beim Ansetzen des im Blickfeld liegenden Schälmessers auf einen noch Schale aufweisenden Teil der Gemüsestange automatisch auch das andere verdeckt liegende Schälmesser auf einen noch Schale aufweisenden Bereich der Gemüsestange ausgerichtet ist, so daß nicht ungewollt Gemüsefleisch durch das verdeckt liegende Messer abgetragen wird. Damit ist ein verlustarmes Schälen gewährleistet. Bei parallel ausgerichteten Schälmessern ist zudem die Führung der Gemüsestange von Hand wesentlich einfacher, da auf die Gemüsestange keine Querkräfte ausgeübt werden, die zu einem Abrutschen der Gemüsestange von den Schälmessern führen könnten. Das Gerät nach der Erfindung kann bei Längsabmessungen bis beispielsweise 20 cm bereits so ausgelegt werden, daß auch verhältnismäßig dicke Gemüsestangen wie Rettich, Schlangengurken, Zucchinis und selbst Schwarzwurzeln geschält werden können, so daß das Handgerät sehr universell einsetzbar ist. Dabei bleibt die allgemein geltende Bedingung erfüllt, daß solche Geräte bei Nichtgebrauch raumsparend in einer Küchenschublade oder dgl. untergebracht werden können.

Gemäß einer ersten Ausführungsform der Erfindung können die Handhebel an ihren freien Enden jeweils einen rechtwinklig zur Längserstreckung der Handhebel ab ragenden Schälmesser-Halter aufweisen, in welchem Fall allerdings die Querabmessung des Handgerätes - senkrecht zur Schwenkebene der Handhebel - mindestens so groß wie die Länge der verwendeten Schälmesser ist. Für dünne Gemüsestangen wie Spargel können verhältnismäßig kurze Schälmesser verwendet werden,so daß auch die Querabmessung des Gerätes noch verhältnismäßig gering ist. Kritischer wird es allerdings, wenn das Gerät auch zum Schneiden von Rettich und Zucchinis ausgelegt ist, da dann entsprechend lange Schälmesser eingesetzt werden müssen.

Zur Reduzierung der Baugröße ist der Erfindung zufolge bevorzugt vorgesehen, daß die Schwenkachse und die Schälmesser geneigt gegenüber der Längserstreckung des Handgerätes angeordnet sind. Diese Ausführungsform ist besonders handlich. Als zweckmäßig hat sich hierbei ein Neigungswinkel der Schwenkachse gegenüber der Längserstreckung des Handgerätes, d. h. der Handhebel einschließlich der Schälmesser-Halter, von etwa 15° bis 40°erwiesen. Durch diese Maßnahmen erreicht man eine gestreckte, nicht sperrige Bauform des Handgerätes, da dessen Querabmessung, im folgenden Höhe genannt, nunmehr beträchtlich kleiner als die Länge des Schälmessers ist. Nach der Erfindung kann vorgesehen werden, daß die Höhe des Handgerätes zwischen einem Fünftel und einem Achtel des Handgerätes beträgt.

Nach weiteren Merkmalen der Erfindung können die Handhebel über ein Scharnier aneinander angelenkt, durch eine an der Scharnierachse angeordnete Spreizfeder belastet und durch eine Scharniersperre in geschlossener Stellung verriegelbar sein. Durch diese Merkmale wird eine sehr platzsparende Aufbewahrung des Handgerätes ermöglicht.

Nach der Erfindung können alternativ die beiden Handhebel einstückig aus einem im Bereich der Schwenkachse federndem Teil hergestellt werden, wobei vorzugsweise die beiden Handhebel zusammen mit den Haltern aus einem einstückigen Federblech-Stanzteil gebogen werden. Diese Bauform zeichnet sich durch eine sehr preiswerte Herstellbarkeit und durch ein besonders müheloses Sauberhalten aus.

Bei dem Handgerät nach der Erfindung können die Handhebel als einarmige Handhebel aneinander angelenkt oder auch als sich kreuzende Zangenhebel aneinander angelenkt sein, wobei im letzteren Falle besonders günstige Kraftübersetzungverhältnisse erreicht werden können, allerdings unter Inkaufnahme einer größeren Baulänge des Gesamtgerätes.

Bei allen bisher beschriebenen Ausführungsformen ist davon ausgegangen, daß die Handhebel durch eine Feder in ihrer Grundstellung gespreizt sind und daß der Schneidandruck der Schälmesser von Hand bestimmt wird. Für eine geübte Hausfrau bereitet es keine Schwierigkeiten, den Schneidandruck feinfühlig zu regulieren. Allerdings können sich - insbesondere bei Gemüsestangen mit örtlich härteren Schalenbereichen - Schwierigkeiten dadurch ergeben, daß die mit der einen Hand zur Überwindung solcher örtlich härteren Stellen erforderliche erhöhte Zugkraft durch einen unbewußten Reflex auf eine erhöhte Kraftanwendung bei der die beiden Schälmesser zusammendrückenden und den Schneidandruck bestimmenden Hand ausgelöst wird, was beispielsweise zum Abbrechen einer Spargelstange führen kann.

Zur Behebung dieser vorbeschriebenen Schwierigkeit kann in Weiterbildung der Erfindung vorgesehen werden, daß der Schneidandruck nicht von Hand, sondern durch Federkraft automatisch und damit gleichbleibend aufgebracht wird. Dies kann gemäß einer Ausführungsform der Erfindung dadurch erreicht werden, daß die Handhebel im mittleren Bereich nach Art von Wäscheklammerschenkeln aneinander angelenkt sind und die Schälmesser durch Zusammendrücken der Kraftschenkel der Handhebel gegen Federkraft auseinander spreizbar sind. Mit der das Gerät haltenden Hand wird also nur eine öffnungsbewegung der Handhebel herbeigeführt, um die Gemüsestange einführen zu können. Danach wird das Gerät mit dieser Hand nur noch gehalten, um die beim Schälen durch die andere Hand ausgeübten Zug- und Druckkräfte aufzufangen. Bei dieser wäscheklammerartigen Ausführungsform kann zweckmäßigerweise vorgesehen werden, daß ein Kraftschenkel eines der Handhebel als Gerätehaltegriff und der Kraftschenkel des anderen Handhebels als mit dem Daumen niederdrückbare Betätigungsschenkel ausgebildet ist, der also mit dem Daumen nur zwecks öffnens des von den beiden Schälmessern gebildeten Schälschlitzes betätigt wird.

Eine sehr preiswerte Ausführungsform eines Handgerätes nach der Erfindung mit automatischem Schneidandruck besteht der Erfindung zufolge darin, daß einer der Handhebel den anderen Handhebel umgreift und daß beide Schälmesser neben der Außenseite des anderen Handhebels angeordnet und durch Zusammendrücken der Handhebel auseinander spreizbar sind. Die beiden Handhebel können hierbei einstückig aus einem Federblechstreifen hergestellt werden, so daß das Handgerät auch im Hinblick auf die Sauberhaltung optimal ist und von Hause aus bereits sehr kompakt ist, da die beiden Handhebel in der Grundstellung geschlossen sind.

In den Unteransprüchen sind noch weitere Merkmale und Abwandlungsmöglichkeiten des Handgerätes nach der Erfindung angegeben.

Der Gegenstand der Erfindung wird im folgenden anhand mehrerer in der Zeichnung dargestellter Ausführungsbeispiele näher beschrieben. In der Zeichnung zeigen:
- Fig. 1: in perspektivischer Darstellung eine erste Ausführungsform eines Handgerätes nach der Erfindung,
- Fig. 2: eine Stirnansicht, in Fig. 1 in Richtung des Pfeiles II gesehen,
- Fig. 3: in einer perspektivischen Ansicht eine zweite Ausführungsform des Handgerätes, das einstückig aus einem Federblech-Stanzteil gefertigt ist,
- Fig. 4: den Stanzzuschnitt zur Ausführungsform nach Fig. 3,
- Fig. 5: in perspektivischer Ansicht eine bevorzugte Ausführungsform des Handgerätes nach der Erfindung,
- Fig. 6: eine Draufsicht auf das Handgerät nach Fig. 5 in geschlossenem Zustand
- Fig. 7: eine Seitenansicht auf das Handgerät nach Fig. 5,
- Fig. 8: eine Draufsicht auf das Handgerät nach Fig. 5 in offenem Zustand,
- Fig. 9: eine vierte Ausführungsform, die funktionsmäßig der Ausführungsform nach den Fig. 5 bis 8 entspricht, bei der aber die Handhebel einstückig aus Federstahlblech hergestellt sind,
- Fig. 10: ein fünftes Ausführungsbeispiel, bei welchem der Schneidandruck durch Federkraft geliefert wird,
- Fig. 11: ein sechstes bevorzugtes Ausführungsbeispiel in Seitenansicht
- Fig. 12: eine Draufsicht zu Fig. 11,
- Fig. 13: eine Stirnansicht, in Fig. 12 in Richtung des Pfeiles XIII gesehen,
- Fig. 14: ein siebtes Ausführungsbeispiel,
- Fig. 15: eine perspektivische Ansicht zum Ausführungsbeispiel nach Fig. 14 und
- Fig. 16: ein achtes Ausführungsbeispiel in perspektivischer Darstellung.

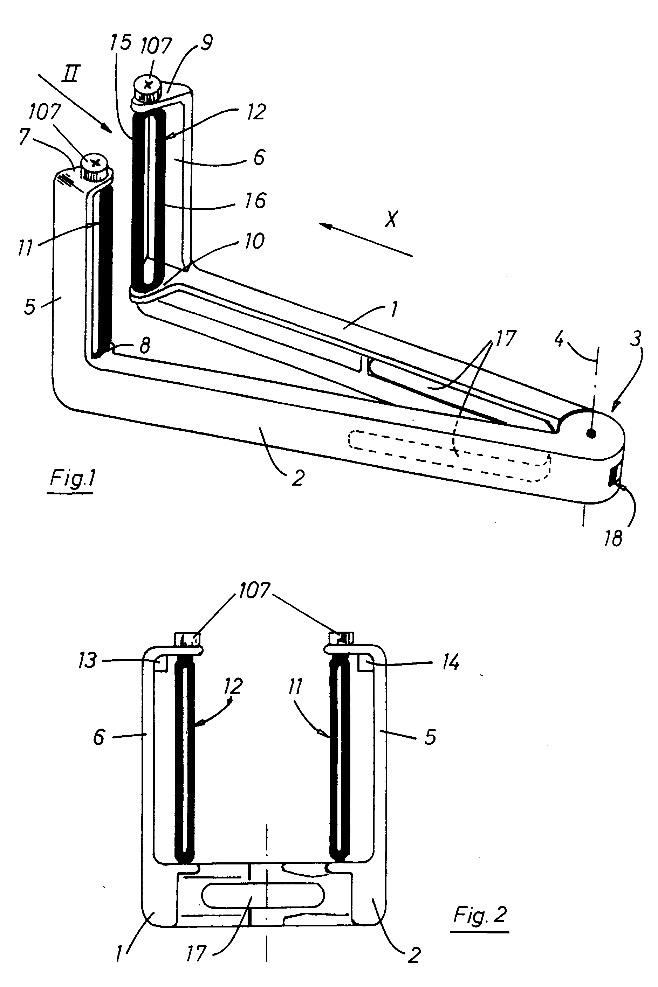

Das in den Fig. 1 und 2 dargestellte Handgerät zum Schälen von Gemüsestangen besteht aus zwei aus Druckguß, z. B. Aluminiumdruckguß, hergestellten Handhebeln 1, 2, die als einarmige Handhebel an einem Ende über ein Scharnier 3 aneinander angelenkt sind, wobei die Schwenkachse 4 senkrecht zur Längserstreckung der Handhebel 1, 2 gerichtet ist. An ihren vorderen, freien Enden sind an die Handhebel 1 und 2 jeweils rechtwinklig abragende Schälmesser-Halter 5, 6 angeformt, die Lageraugen 7, 8, 9, 10 aufweisen, zwischen denen jeweils übliche Spar-Schälmesser 11, 12 lose drehbar gelagert sind, wobei die Drehbarkeit der Schälmesser 11, 12 durch Anschläge 13, 14 begrenzt ist. Die Schälmesser 11, 12 bestehen in üblicher Weise jeweils aus einer Schneide 15 und einem Anschlagteil 16, wobei der Anschlagteil 16 auf der Seite des Scharniers 3 und die Schneide 15 außen liegen, so daß eine zu schälende Gemüsestange bei den Schälhüben in Richtung des Pfeiles X durch das Messerpaar hindurchgezogen wird. Durch Zusammendrücken der von einer Hand zu umgreifenden Handhebel 1, 2 gegen die Kraft einer Spreizfeder 17 werden die Schälmesser an die Gemüsestange angestellt und der Schneidandruck bestimmt. Da die beiden Schälmesser 11, 12 mit ihrer Längserstreckung parallel zur Schwenkachse 4 gerichtet sind, bleiben die Schälmesser 11, 12 unabhängig von der Spreizstellung der Handhebel 1, 2 immer exakt parallel zueinander, so daß die Gemüsestange immer an exakt diametral sich gegenüberliegenden Seiten geschält wird. Das Handgerät nach den Fig. 1 und 2 ist ferner mit einer Scharniersperre 18 versehen, die es erlaubt, die beiden Handhebel 1, 2 bei Nichtgebrauch in einer geschlossenen Stellung zu arretieren. Derartige Scharniersperren 18 sind detailliert in der DE-PS 1 144 659 und DE-PS 1 177 086 beschrieben und deshalb nicht nochmals erläutert. Die Schälmesser 11, 12 sind mittels Schrauben 107 gehalten und leicht auswechselbar. Durch Wechseln der Einbaulage der Schälmesser um 180° kann gewünschtenfalls der Anschlagteil 16 nach vorne gesetzt und damit die für den Benutzer bequemste Handhabungsart gewählt werden.

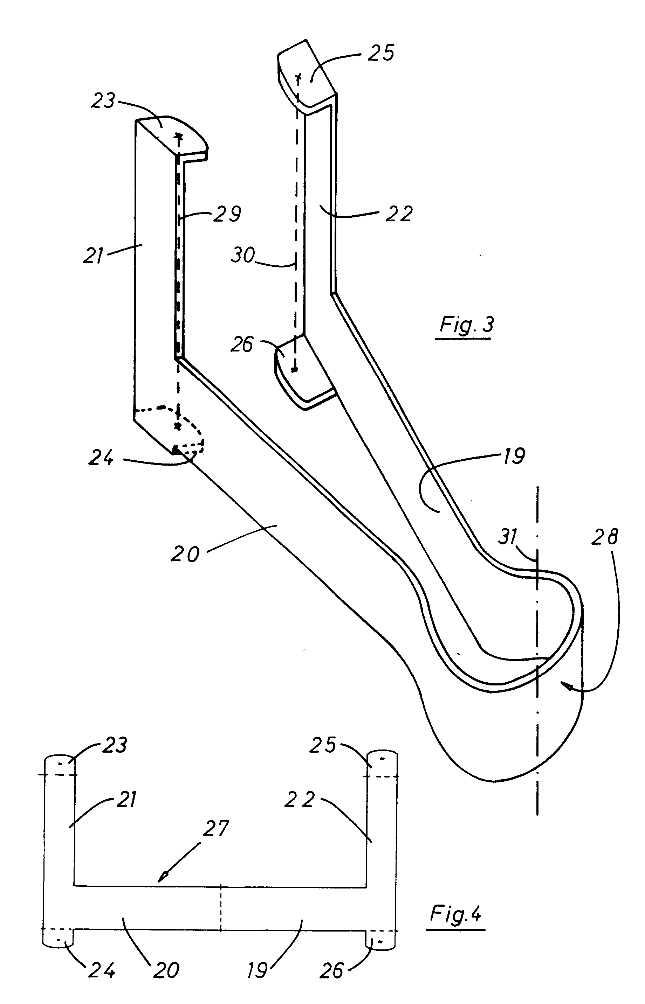

Die Fig. 3 und 4 veranschaulichen ein funktionsmäßig gleichwirkendes Handgerät, bei welchem die Handhebel 19, 20, die rechtwinklig davon abragenden Halter 21, 22 und deren Lageraugen 23, 24, 25, 26 einstückig aus einem Federblech-Stanzteil 27 gefertigt ist. Die beiden Handhebel 19, 20 gehen im Bereich des Gelenkes über einen federnden Bogen 28 ineinander über, wobei auch hier die Federungskraft darauf gerichtet ist, das Gerät in der Grundstellung in einer offenen, gespreizten Handhebelstellung zu halten. Auch hier sind die - nur gestrichelt angedeuteten - Schälmesser 29, 30 parallel zur Schwenkachse 31 gerichtet.

Wie Fig. 4 zeigt, ist der Stanzzuschnitt im wesentlichen U-förmig. Zur Vermeidung von Stanzverlusten kann auch von einem im wesentlichen Z-förmigen Stanzzuschnitt ausgegangen werden, bei dem die Kalter 21, 22 auf gegenüberliegenden Seiten des Bandstreifens für die Handhebel 19, 20 angeordnet sind und ein Halter dann zusätzlich zur Seite des anderen Halters hin umgebogen werden muß. Dieser umzubiegende Halter muß entsprechend der Breite des Streifens für die Handhebel 19, 20 und für eine Ausbildung eines unteren Lagerauges 24 oder 26 entsprechend länger bemessen werden.

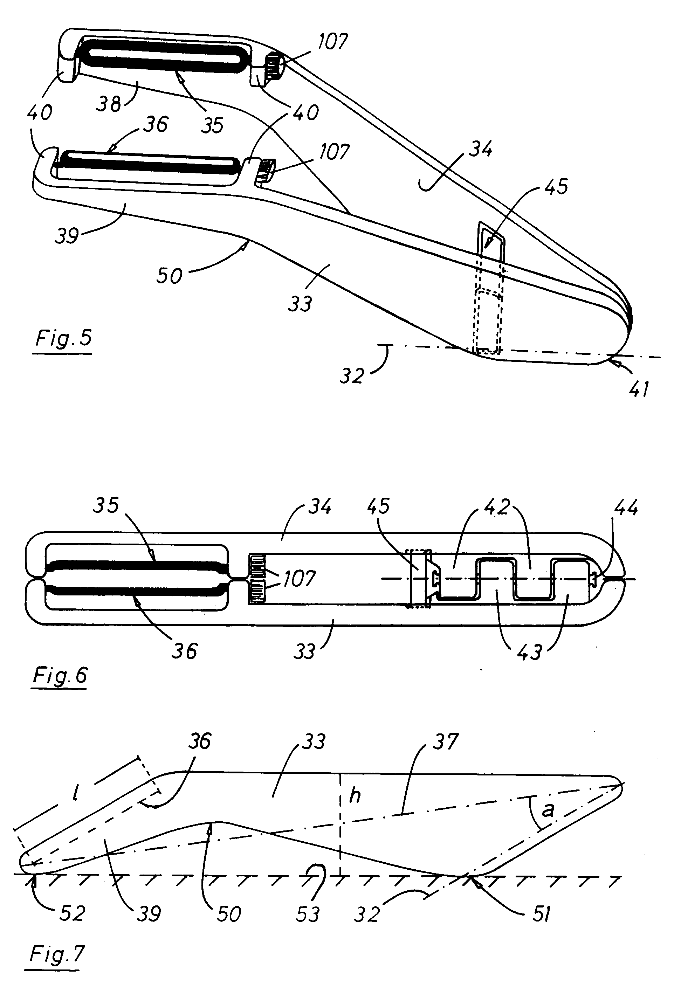

Die Fig. 5 bis 8 zeigen ein bevorzugtes Ausführungsbeispiel, bei welchem die Schwenkachse 32 der beiden Handhebel 33, 34 und die Längsachsen der Schälmesser 35, 36 um einen Neigungswinkel a von etwa 22° geneigt gegenüber der Längserstreckung des Handgerätes, dargestellt durch die strichpunktierte Linie 37, geneigt angeordnet sind. Die Handhebel 33, 34 sind hier zusammen mit den Schälmesserhaltern 38, 39 und deren Lageraugen 40 aus Druckguß, z. B. Aluminiumdruckguß, hergestellt. Die Handhebel 33, 34 sind über ein Scharnier 41 aneinandergelenkt, was durch paarweise an die Handhebel angeformte Scharnierhülsen 42, 42 und 43, 43 und durch einen Scharnierbolzen 44 gebildet ist. Auch diese Ausführungsform ist bevorzugt mit einer Scharniersperre 18 gemäß Fig. 1 ausgerüstet, die aber hier nicht gezeigt ist. Zwischen den beiden Handhebeln 33, 34 ist eine Blattfeder 45 eingespannt, die im wesentlichen U-förmig gebogen ist und deren senkrecht zur Schwenkachse 32 gerichtete Schenkel 46, 47 von Nuten 48, 49 der Handhebel aufgenommen sind. Statt einer solchen Blattfeder kann auch eine den Scharnierbolzen 44 umschließende Spreiz-Schenkelfeder vorgesehen werden.

Wie insbesondere aus Fig. 7 ersichtlich ist, sind die Handhebel 33, 34 in der Seitenansicht etwa trapezförmig, wobei an einer Längsseite des Trapezes eine Griffmulde 50 ausgenommen ist, deren tiefste Stelle nahe hinter den Schälmesser-Haltern 38, 39 liegt. Die Handhebel 33, 34 mit ihrem angeformten Halter 38, 39 können in der Seitenansicht auch Z- oder S-förmig gestaltet sein. Beim Wegräumen liegt das Gerät im Bereich 51 seines Scharnieres 41 und an den vorderen Enden 52 der beiden Halter 38, 39 auf der Unterlage 53, z. B. einem Schubfachboden, auf. Die Höhe h des Gerätes ist dabei deutlich kürzer als die Länge l der Schälmesser und beträgt beim gezeigten Ausführungsbeispiel nur etwa ein Siebtel der Gesamtlänge, d. h. der Längserstreckung 37, des Gerätes. Diese Ausführungsform zeichnet sich durch eine bequeme Handhabbarkeit und eine besonders raumsparende Aufbewahrbarkeit aus.

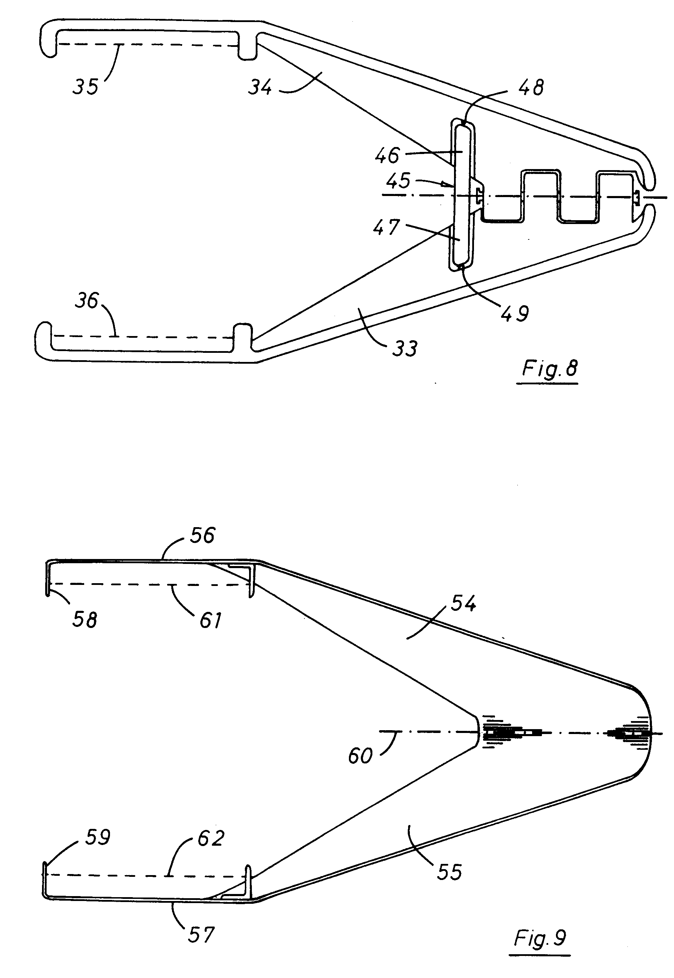

Fig. 9 veranschaulicht ein Ausführungsbeispiel, das der Ausführungsform nach den Fig. 5 bis 8 funktionsmäßig entspricht. Im Unterschied dazu sind hier die Handhebel 54, 55 mit ihren Schälmesser-Haltern 56, 57 und den äußeren Lageraugen 58, 59 aus einem einstückigen Federblech-Stanzteil hergestellt. Auch hier ist die Biegelinie, bzw. Schwenkachse 60, der Handhebel parallel zur Längserstreckung der Schälmesser 61, 62 gerichtet und wiederum um einen Winkel a gegenüber der Längserstreckung der Handhebel geneigt, wie anhand Fig. 7 erläutert, die im wesentlichen zugleich eine Seitenansicht zum Ausführungsbeispiel nach Fig. 9 veranschaulicht.

Bei allen bisher beschriebenen Ausführungsformen wird der Schneidandruck von Hand durch Zusammendrücken der Handhebel bestimmt. Bei den nachfolgend beschriebenen Ausführungsformen wird im Unterschied hierzu der Schneidandruck durch eine Federkraft geliefert.

Bei den bevorzugten Ausführungsformen (vgl. Fig. 8 und 9) sind die verhältnismäßig breiten Handhebel nicht nur in ihrer Längserstreckung, sondern auch senkrecht zu ihrer Längserstreckung in der Grundstellung jeweils V-förmig gegeneinander geneigt und liegen dadurch besonders griffig in der Hand. Beim Zusammendrücken werden beide vorerwähnten V-Spreizungen mehr oder weniger geschlossen, was ein sehr feinfühliges Arbeiten bei Gemüsestangen von kleinerem bis größerem Durchmesser ermöglicht. Zudem bieten sich diese Ausführungsformen für ein Schälen mit ziehendem Schnitt an, indem die Gemüsestangen nicht senkrecht, sondern schräg durch den von den Schälmessern gebildeten Schneidschlitz gezogen werden.

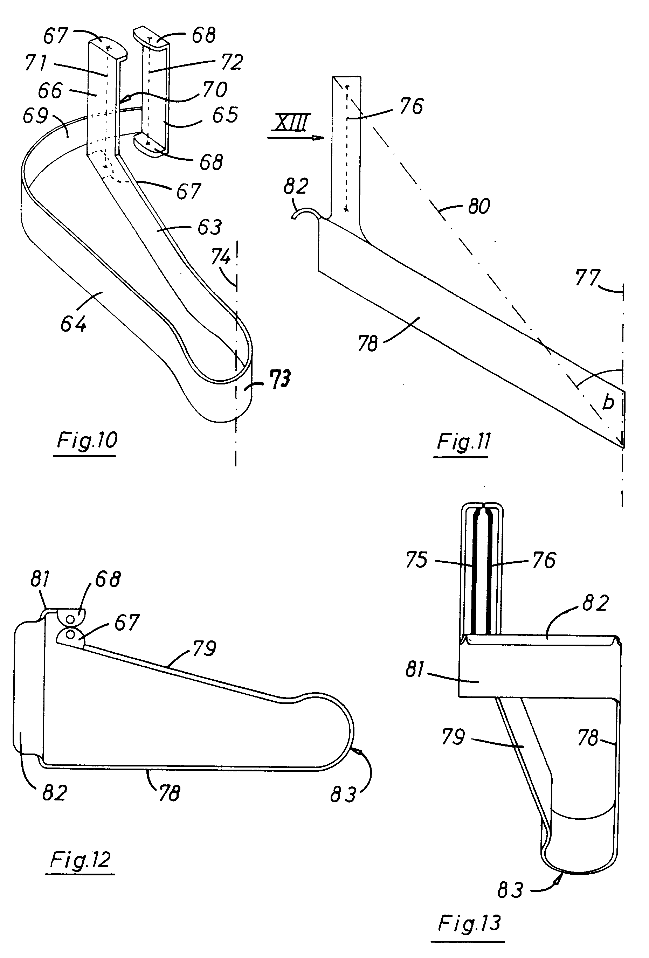

Fig. 10 zeigt ein einstückig aus einem Federblech-Stanzteil gefertigtes Handgerät mit den Handhebeln 63, 64, Schälmesser-Halter 65, 66 und den Lageraugen 67, 68. Der Handhebel 64 greift mit einer Verlängerung 69 außen um den Kalter 66 des anderen Handhebels 63 herum und ist mit seinen Lageraugen 68, 68 auf die Außenseite 70 des Halters 66 gerichtet, dessen Augen 67, 67 von dieser Außenseite 70 abragen. Die beiden Schälmesser 71, 72 sind somit außen neben dem Handhebel 63 angeordnet und werden durch die Spreizkraft des Federbogens 73 in geschlossener Stellung gehalten. Zum Einführen einer zu schälenden Gemüsestange werden die beiden Handhebel 63, 64 vorübergehend zusammengedrückt, wobei sich der Schneidschlitz öffnet, und nach Einführen der Gemüsestange wird der Handdruck auf die Handhebel 63, 64 aufgehoben, wonach sich die Schälmesser 71, 72 mit einem vorgegebenen Schneidandruck an die Gemüsestange anlegen. Beim gezeigten Ausführungsbeispiel ragen die Halter 65, 66 und damit die Schälmesser 71, 72 rechtwinklig von den Handhebeln 63, 64 ab, sind aber auch hier parallel zur Schwenkachse 74 gerichtet.

Die Fig. 11 bis 13 veranschaulichen ein weiteres, bevorzugtes Ausführungsbeispiel, bei dem im Unterschied zu Fig. 10 die Schälmesser 75, 76 und die Schwenkachse 77 der Handhebel 78, 79 um einen Winkel b von etwa 35° gegenüber der Längserstreckung 80 der Handhebel geneigt sind. Die den Handhebel 79 umgreifende Verlängerung 81 trägt an ihrem oberen Rand eine abgebogene Auflage 82 für die Gemüsestange. Auch bei diesem Ausführungsbeispiel kann der Federbogen 83 durch ein spreizfeder-belastetes Scharnier ersetzt werden.

Bei allen bisher erläuterten Ausführungsbeispielen sind einarmige Handhebel vorgesehen. Selbstverständlich können bei den Ausführungsformen mit Scharnier auch Handhebel vorgesehen werden, die als sich kreuzende Zangenhebel aneinander angelenkt sind.

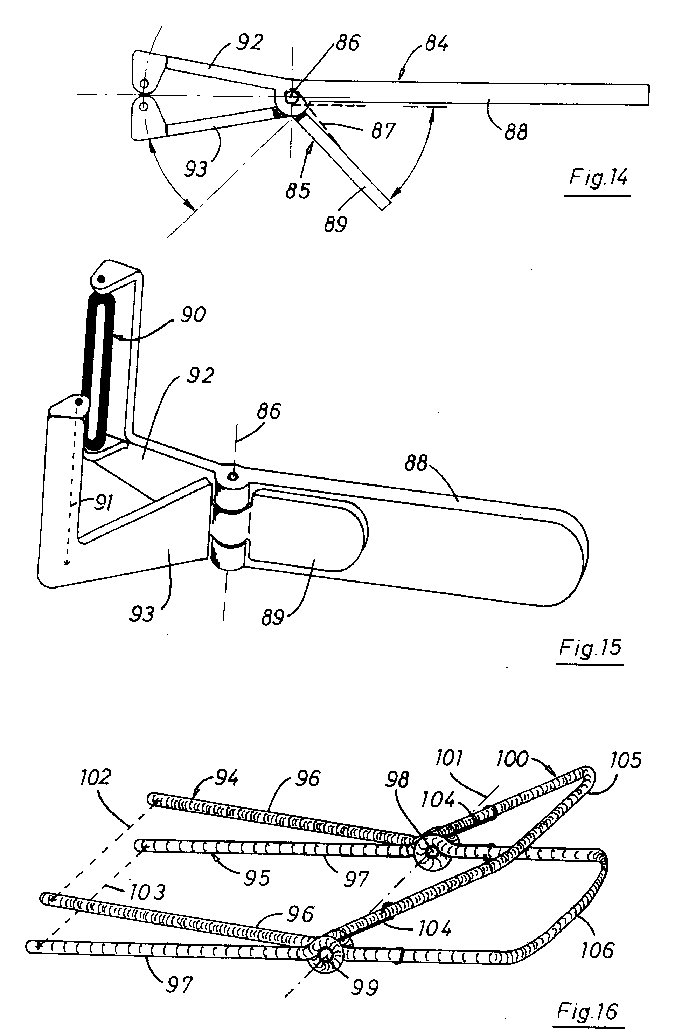

Bei der Ausführungsform nach den Fig. 14 und 15 sind die Handhebel 84, 85 im mittleren Bereich nach Art von Wäscheklammerschenkeln um eine Scharnierachse 86 aneinander angelenkt, wozu insbesondere der Handhebel 85 im Bereich dieser Anlenkstelle verhältnismäßig stark abgewinkelt ist. Durch eine die Scharnierachse 86 umschließende Spreizschenkelfeder 87 werden die Kraftschenkel 88, 89 der beiden Handhebel 84, 85 auseinandergespreizt und damit die die Schälmesser 90, 91 tragenden Arbeitsschenkel 92, 93 in Schließstellung zusammengedrückt. Der Kraftschenkel 88 ist hier länger als der Kraftschenkel 89 und als Geräte-Haltegriff ausgebildet. Zum Einführen einer Gemüsestange wird der Kraftschenkel 89 mit dem Daumen niedergedrückt, vgl. die Stellung nach Fig. 15, und damit der Schneidschlitz geöffnet.

Fig. 16 zeigt schließlich noch eine Ausführungsform, bei der die Handhebel 94, 95 jeweils aus einem etwa rechteckigen U-Bügel bestehen, die im Bereich ihrer beiden Seitenschenkel 96, 97 um Achsbolzen 98, 99 aneinander angelenkt sind. Der in Fig. 16 obere U-Bügel 94 ist im Bereich dieser Anlenkung nach außen hin unter Schaffung eines frei betätigbaren Kraftschenkels 100 abgewinkelt. Die U-Bügel bestehen jeweils aus Drahtstücken, die unter Schaffung von Lageraugen um die Achsbolzen 98, 99 herumgebogen sind. An ihren freien Enden tragen die Handhebel 94, 95 parallel zur Schwenkachse 101 ausgerichtete Schälmesser 102, 103, die in der Grundstellung durch Spreizschenkelfedern 104 gegeneinander gehalten sind. Durch Zusammendrücken der Querschenkel 105, 106 der U-Bügel werden die Schälmesser in eine Offenstellung zum Einführen einer Gemüsestange gebracht.

Alle beschriebenen Handgeräte sind sowohl für Rechtshänder als auch für Linkshänder geeignet.

## Patentansprüche

1. Handgerät zum Schälen von länglichem Gemüse, insbesondere von Spargel, Möhren, Gurken, Rettichen, Schwarzwurzeln oder Zucchinis, mit zwei gegen Federkraft um eine Schwenkachse schwenkbaren Handhebeln, die an ihren freien Enden zwei sich gegenüberliegende, als Sparschäler ausgebildete Schälmesser tragen, dadurch gekennzeichnet, daß die Schälmesser (11, 12) mit ihrer Längsachse parallel zur Schwenkachse (4) der Handhebel (1, 2) gerichtet sind und unabhängig von der Schwenkstellung der Handhebel (1, 2) ständig parallel zueinander ausgerichtet bleiben.

2. Handgerät nach Anspruch 1, dadurch gekennzeichnet, daß die Handhebel (1, 2; 19, 20) an ihren freien Enden jeweils einen rechtwinklig zur Längserstreckung der Handhebel abragenden Schälmesser-Halter (5, 6; 21, 22) aufweisen.

3. Handgerät nach Anspruch 1, dadurch gekennzeichnet, daß die Schwenkachse (32, 77) und die Längsachsen der Schälmesser (35, 36; 75, 76) geneigt gegenüber der Längserstreckung (37, 80) der Handhebel (33, 34; 78, 79) angeordnet sind.

4. Handgerät nach den Ansprüchen 1 und 3, dadurch gekennzeichnet, daß der Neigungswinkel (a, b) der Schwenkachse (32, 77) gegenüber der Längserstreckung (37, 80) der Handhebel (33, 34; 78, 79) etwa 15° bis 40° beträgt.

5. Handgerät nach den Ansprüchen 1, 3 und 4, dadurch gekennzeichnet, daß die Höhe (h) des auf einer Unterlage (53) abgelegten Handgerätes kleiner als die Länge (1) der Schälmesser (35, 36) ist.

6. Handgerät nach den Ansprüchen 3 bis 5, dadurch gekennzeichnet, daß die Handhebel (33, 34) mit ihren angrenzenden Schälmesser-Haltern (38, 39) in Seitenansicht trapezförmig, S-bogenförmig oder flach-Z-förmig sind.

7. Handgerät nach den Ansprüchen 3 bis 6, dadurch gekennzeichnet, daß die Handhebel (33, 34) im mittleren Bereich mit Griffmulden (50) versehen sind.

8. Handgerät nach den Ansprüchen 3 bis 7, dadurch gekennzeichnet, daß die Höhe (h) des Handgerätes zwischen einem Drittel und einem Achtel der Längserstreckung (37) des Handgerätes beträgt.

9. Handgerät nach den Ansprüchen 2 oder 3 bis 8, dadurch gekennzeichnet, daß die Handhebel (1, 2; 19, 20; 33, 34; 54, 55) als einarmige Hebel gelagert und von einer Hand umgreifbar sind.

10. Handgerät nach Anspruch 9, dadurch gekennzeichnet, daß die Handhebel (1, 2; 19, 20; 33, 34) durch die Kraft einer Feder (17, 28, 45) gespreizt und von Hand zusammendrückbar sind.

11. Handgerät nach Anspruch 10, dadurch gekennzeichnet, daß die Handhebel (1, 2; 33, 34) über ein Scharnier (3, 41) aneinander angelenkt, durch eine an der Scharnierachse (4, 32) angeordnete Spreizfeder (17, 45) belastet und durch eine Scharniersperre (18) in geschlossener Stellung verriegelbar sind.

12. Handgerät nach Anspruch 10, dadurch gekennzeichnet, daß die beiden Handhebel (19, 20; 54, 55) einstückig aus einem im Bereich der Schwenkachse (31, 60) federndem Materialstreifen gefertigt sind.

13. Handgerät nach Anspruch 12, dadurch gekennzeichnet, daß die beiden Handhebel (19, 20) zusammen mit den Haltern (21, 22) aus einem einstückigen Federblech-Stanzteil (27) gebogen sind.

14. Handgerät nach Anspruch 13, dadurch gekennzeichnet, daß das Federblech-Stanzteil (27) im Zuschnitt U- oder Z-förmig ist.

15. Handgerät nach den Ansprüchen 2 oder 3 bis 5, dadurch gekennzeichnet, daß die Handhebel als sich kreuzende Zangenhebel aneinander angelenkt sind.

16. Handgerät nach den Ansprüchen 2 oder 3 bis 5, dadurch gekennzeichnet, daß die Handhebel (84, 85) im mittleren Bereich nach Art von Wäscheklammerschenkeln aneinander angelenkt sind und die Schälmesser (90, 91) durch Zusammendrücken der Kraftschenkel (88, 89) der Handhebel gegen Federkraft (87) auseinander spreizbar sind.

17. Handgerät nach Anspruch 16, dadurch gekennzeichnet, daß ein Kraftschenkel (88) als Gerätehaltegriff und der andere Kraftschenkel (89) als ein mit dem Daumen niederdrückbarer Betätigungsschenkel ausgebildet ist.

18. Handgerät nach Anspruch 16, dadurch gekennzeichnet, daß die Handhebel (94, 95) jeweils aus einem etwa rechteckigen U-Bügel bestehen, die an ihren beiden Seitenschenkeln (96, 97) jeweils aneinander angelenkt sind und von denen mindestens einer (96) im Bereich der Schwenkachse (101) nach außen abgewinkelt ist, und daß die Schälmesser (102, 103) beidendig an den freien Enden der Seitenschenkeln (96, 97) gelagert sind.

19. Handgerät nach Anspruch 9 und den kennzeichnenden Merkmalen eines oder mehrerer der Ansprüche 11 bis 14, dadurch gekennzeichnet, daß einer (64) der Handhebel (63, 64) den anderen Handhebel (63) mit einer Verlängerung (69) umgreift und daß beide Schälmesser (71, 72) neben der Außenseite (70) des anderen Handhebels (63) angeordnet und durch Zusammendrücken der Handhebel (63, 64) auseinander spreizbar sind.

20. Handgerät nach Anspruch 19, dadurch gekennzeichnet, daß an der Verlängerung (81) eine Auflage (82) für eine zu schälende Gemüsestange angeordnet ist.

## Claims

1. Hand tool for peeling elongated vegetables, in particular asparagus, carrots, cucumbers, radishes, salsify or courgettes, with two hand-levers which are rotatable against the force of a spring around a rotation axis and whose free ends carry two peeling-blades positioned opposite one another and designed as parers, characterised in that the longitudinal axis of the peeling-blades (11, 12) is aligned parallel to the rotation axis (4) of the hand-levers (1, 2) and, independently of the rotation position of the hand-levers (1, 2) the peeling-blades remain constantly aligned parallel to one another.

2. Hand tool according to Claim 1, characterized in that the hand-levers (1,2; 19,20) each display at their free ends a peeling-blade mounting (5,6; 21,22) projecting at right angles to the longitudinal extent of the hand-levers.

3. Hand tool according-to Claim 1,. characterized in that the rotation axis (32, 77) and the longitudinal axes of the peeling-blades (35,36; 75,76) are positioned at an angle to the longitudinal extent (37, 80) of the hand-levers (33,34; 78,79).

4. Hand tool according to Claims 1 and 3, characterized in that the angle of inclination (a, b) between the rotation axes (32, 77) and the longitudinal center axis (37, 80) of the hand-levers (33,34; 78, 79) is approximately between 15 and 40 degrees.

5. Hand tool according to Claims 1, 3 and 4, characterized in that the height (h) of the hand tool when placed upon a rest (53) is less than the length (1) of the peeling-blades (35, 36).

6. Hand tool according to Claims 3 to 5, characterized in that, when viewed from the side, the hand-levers (33, 34), together with their integral peeling-blade mountings (38, 39) form a trapezium, an S-shape or a flat Z-shape.

7. Hand tool according to Claims 3 to 6, characterized in that the hand-levers (33, 34) are equipped in their central area with recessed grips (50).

8. Hand tool according to Claims 3 to 7, characterized in that the height (h) of the hand tool is between one third and one eighth of the longitudinal center axis (37) of the hand tool.

9. Hand tool according to Claims 2 or 3 to 8, characterized in that the hand-levers (1,2; 19,20; 33,34; 54,55) are mounted as single-arm levers and may be grasped with one hand.

10. Hand tool according to Claim 9, characterized in that the hand-levers (1,2; 19,20; 33,34) can be spread apart by the force of a spring (17, 28, 45) and pressed together by hand.

11. Hand tool according to Claim 10, characterized in that the hand-levers (1,2; 33,34) are linked to one another by a hinge (3, 41), are pressured by a bracing spring (17, 45) mounted on the hinge axis (4, 32) and may be fastened in a closed position by means of a hinge lock (18).

12. Hand tool according to Claim 10, characterized in that the two hand-levers (19,20; 54,55) are made in one piece from a strip of material which is resilient in the area of the rotation axis (31, 60).

13. Hand tool according to Claim 12, characterized in that the two hand-levers (19, 20) together with the mountings (21, 22) are bent out of a single-piece stamped part (27) from a spring steel sheet.

14. Hand tool according to Claim 13, characterized in that the spring-steel stamped part (27) is a U- or Z-shaped blank.

15. Hand tool according to Claims 2 or 3 to 5, characterized in that the hand-levers are connected to one another as crossed pincer levers.

16. Hand tool according to Claims 2 or 3 to 5, characterized in that the hand-levers (84, 85) are connected to one another in their central area like the two shanks of a clothes peg and in that the peeling-blades (90, 91) can be spread apart by pressing together the operating shanks (88, 89) of the hand-levers against the pressure of a spring (87).

17. Hand tool according to Claim 16, characterized in that one operating shank (88) is designed as a handle for the device and the other operating shank (89) is designed as an activating shank which may be pressed down with the thumb.

18. Hand tool according to Claim 16, characterized in that the hand-levers (94, 95) each consist of roughly rectangular U-shaped pieces, each connected to the other by its two lateral shanks (96, 97) and at least one (96) of which is angled away outwards in the area of the rotation axis (101), and that the peeling-blades (102, 103) are mounted at both ends upon the free ends of the lateral shanks (96, 97).

19. Hand tool according to Claim 9 and the characteristic features of one or more of Claims 11 to 14, characterized in that an extension (69) of one (64) of the hand-levers (63, 64) passes around the other hand-lever (63), and that both peeling-blades (71, 72) are located to the outside (70) of the other lever (63) and can be spread apart by pressing the hand-levers (63, 64) together.

20. Hand tool according to Claim 19, characterized in that a support (82) for the vegetable which is to be peeled is located on the extension (81).

## Revendications

1. Outil à main pour éplucher des légumes allongés, en particulier des asperges, carottes, concombres, radis noirs, salsifis, ou courgettes, ayant deux leviers à main, susceptibles de pivoter autour d'un axe de pivotement, à l'encontre de la force d'un ressort, portant à leurs extrémités libres deux lames d'épluchage opposées, réalisées sous forme d'éplucheurs ménagers, caractérisé en ce que les lames d'épluchage (11, 12) sont orientées avec leur axe longitudinal parallèle à l'axe de pivotement (4) des leviers à main (1, 2) et restent orientées constamment parallèlement l'une à l'autre, indépendamment de la position de pivotement des leviers à main (1, 2).

2. Outil à main selon la revendication 1, caractérisé en ce que les leviers à main (1, 2; 19, 20) présentent chacun à leur extrémité libre un porte lame d'épluchage (5, 6; 21, 22), s'écartant perpendiculairement de la direction longitudinale des leviers à main.

3. Outil à main selon la revendication 1, caractérisé en ce que l'axe de pivotement (32, 77) et les axes longitudinaux des lames d'épluchage (35, 36; 75, 76) sont disposés inclinés par rapport à la direction longitudinale (37, 80) des leviers à main (33, 34; 78, 79).

4. Outil à main selon les revendications 1 et 3, caractérisé en ce que l'angle d'inclinaison (a, b) de l'axe de pivotement (32, 77) par rapport à la direction longitudinale (37, 80) des leviers à main (33, 34; 78, 79) est d'à peu près 15° à 40°.

5. Outil à main selon les revendications 1, 3 et 4, caractérisé en ce que la hauteur (h) de l'outil à main posé sur une base (53) est inférieure à la longueur (1) des lames d'épluchage (35, 36).

6. Outil à main selon les revendications 3 à 5, caractérisé en ce que, observés en vue de côté, les leviers à main (33, 34) sont avec leurs porte-lames d'épluchage (38, 39) limitrophes de forme trapézoïdale, arquée en S ou en forme de Z plat.

7. Outil à main selon les revendications 3 à 6, caractérisé en ce que les leviers à main (33, 34) sont pourvus dans la zone centrale d'auges de prise (50).

8. Outil à main selon les revendications 3 à 7, caractérisé en ce que la hauteur (h) de l'outil à main est comprise entre un tiers et un huitième de sa longueur (37).

9. Outil à main selon les revendications 2 ou 3 à 8, caractérisé en ce que les leviers à main (1, 2; 19, 20; 33, 34; 54, 55) sont montés sous forme de levier à un bras et peuvent être saisis sur leur pourtour à l'aide d'une seule main.

10. Outil à main selon la revendication 9, caractérisé en ce que les leviers à main (1, 2; 19, 20; 33, 34) sont écartés au moyen de la force d'un ressort (17, 28, 45) et peuvent etre pressés l'un contre l'autre à la main.

11. Outil à main selon la revendication 10, caractérisé en ce que les leviers à main (1, 2; 33, 34) sont articulés l'un à l'autre par l'intermédiaire d'une charnière (3, 41), sollicités au moyen d'un ressort d'écartement (17, 45) disposé sur l'axe de charnière (4, 32), et susceptibles d'etre verrouillés en position fermée au moyen d'un verrou de charnière (18).

12. Outil à main selon la revendication 10, caractérisé en ce que les deux leviers à main (19, 20; 54, 55) sont fabriqués d'une seule pièce, à partir d'une bande de matériau présentant de l'élasticité dans la zone de l'axe de pivotement (31, 60).

13. Outil à main selon la revendication 12, caractérisé en ce que les deux leviers à main (19, 20) sont formés par cintrage, conjointement avec les supports (21, 22), à partir d'une pièce estampée (27) en tôle élastique, monobloc.

14. Outil à main selon la revendication 13, caractérisé en ce que la pièce estampée (27) en tôle élastique est un flan de forme en U ou en Z.

15. Outil à main selon les revendications 2 ou 3 à 5, caractérisé en ce que les leviers à main sont articulés l'un à l'autre à la manière d'un levier de pince croisé.

16. Outil à main selon les revendications 2 ou 3 à 5, caractérisé en ce que les leviers à main (84, 85) sont articulés dans la zone centrale à la manière de branches de pinces à linge et les lames d'épluchage (90, 91) sont susceptibles d'être écartées l'une de l'autre par compression des branches de prise (88,89) des leviers à main à l'encontre de la force d'un ressort (87).

17. Outil à main selon la revendication 16, caractérisé en ce qu'une branche de prise (88) est réalisée sous forme poignée de maintien d'outil et l'autre branche de prise (89) est réalisée sous forme de branche d'actionnement, pouvant être enfoncée à l'aide du pouce.

18. Outil à main selon la revendication 16, caractérisé en ce que les leviers à main (94, 95) sont chacun composés d'un étrier en U à peu près à angle droit, chacun articulés à l'autre à leurs deux branches latérales (96, 97), et dont au moins l'un (96) est coudé vers l'extérieur dans la zone de l'axe de pivotement (101), et en ce que les lames d'épluchage (102, 103) sont montées aux deux extrémités libres des branches latérales (96, 97).

19. Outil à main selon la revendication 9 et les parties caractérisantes d'une ou plusieurs des revendications 11 à 14, caractérisé en ce que l'un (64) des leviers à main (63, 64) entoure l'autre levier à main (63) par un prolongement (69) et en ce que les deux lames d'épluchage (71, 72) sont disposées à côté de la face extérieure (70) de l'autre levier à main (63) et susceptibles d'être écartées l'une de l'autre par compression des leviers à main (63, 64).

20. Outil à main selon la revendication 19, caractérisé en ce qu'un appui (82) pour tige de légume à éplucher est disposé sur le prolongement (81).
